# EUROPEAN PATENT APPLICATION

(11) **EP 4 567 937 A1**
(43) Date of publication of application: **11.06.2025**
(21) Application number: 22969825.3
(22) Date of filing: 30.12.2022
(51) Int. Cl.: H01M 4/66, H01M 50/581

(54) **CURRENT COLLECTOR, BATTERY CELL, BATTERY, AND ELECTRIC DEVICE**

(71) Applicant: Contemporary Amperex Technology (Hong Kong) Limited, Central, Hong Kong (HK)
(72) Inventor: CHEN, Jiahua, Ningde, Fujian 352100 (CN)
(74) Representative: Laufhütte, Dieter
(86) International application number: PCT/CN2022/144155
(87) International publication number: WO 2024/138683

(57) **Abstract**

Provided are a current collector (100), a battery cell (200), a battery (300), and an electrical device (400). The current collector (100) includes a conductive layer (10) configured to output current, and a substrate layer (20) attached to a part of the conductive layer (10). A melting point of the substrate layer (20) is lower than a melting point of the conductive layer (10). The substrate layer (20) is configured to shrink and rupture under heat, enabling the conductive layer (10) to rupture to form a through hole (21).

## Description

### FIELD

The present disclosure relates to the field of batteries, and particularly, to a current collector, a battery cell, a battery, and an electrical device.

### BACKGROUND

In the related art, an existing battery cell includes a positive electrode plate, a negative electrode plate, and a separator. The separator is disposed between the positive electrode plate and the negative electrode plate. During a charging process of the battery cell, dendritic crystals are formed and deposited on a surface of the negative electrode plate. The dendritic crystals, after penetrating the separator, come into contact with an active substance layer on the positive electrode plate, resulting in a short-circuit of the battery cell. Thus, the battery cell is likely to undergo thermal runaway, thereby lowering operational reliability of the battery cell.

### SUMMARY

The present disclosure aims to at least solve one of the technical problems existing in the related art. To this end, an object of the present disclosure is to provide a current collector. During a charging process of a battery, a through hole is formed on the current collector after dendritic crystals formed on the current collector penetrate a separator to result in a short-circuit of a battery cell and generation of heat, thereby reducing a risk of heat diffusion to the current collector and improving operational reliability of the battery cell.

The present disclosure further provides a battery cell.

The present disclosure further provides a battery.

The present disclosure further provides an electrical device.

In a first aspect, embodiments of the present disclosure provide a current collector. The current collector includes a conductive layer configured to output current and a substrate layer attached to a part of the conductive layer. A melting point of the substrate layer is lower than a melting point of the conductive layer. The substrate layer is configured to shrink and rupture under heat, enabling the conductive layer to rupture to form a through hole.

In the above technical solution, the melting point of the substrate layer is lower than the melting point of the conductive layer. During a charging process of the battery cell, the dendritic crystals formed on the current collector penetrate the separator, leading to the short-circuit of the battery cell and generating heat. The substrate layer shrinks and ruptures under heat, enabling the conductive layer to rupture to form the through hole. In this way, the short-circuited positive and negative electrodes are disconnected, thereby lowering a risk of thermal runaway in the battery cell and improving the operational reliability of the battery cell.

In some embodiments, the melting point of the substrate layer is A, and A satisfies a relational expression of 110°C≤A≤130°C.

In the above technical solution, by setting the melting point of the substrate layer to be A, the substrate layer can have a lower melting point. After the short-circuit of the battery cell and the generation of heat, the substrate layer can shrink to rupture, thereby forming the through role on the current collector. In addition, during a normal operation of the battery cell, the substrate layer will not be ruptured.

In some embodiments, an elastic modulus of the substrate layer is B, and B satisfies a relational expression of B≥15MPa.

In the above technical solution, by setting the elastic modulus of the substrate layer to be B, the substrate layer can have suitable contractility, which is conducive to the shrinking and rupture of the substrate layer after the short-circuit of the battery cell and the generation of heat.

In some embodiments, the current collector further includes a separator member disposed on the substrate layer and configured to divide the substrate layer into a plurality of regions, and the separator member has a higher melting point than the substrate layer.

In the above technical solution, by providing the separator member, after the short circuit in the battery cell occurs, the heat is transferred to regions on the current collector corresponding to the dendritic crystals, to form the through hole on the current collector. Since the separator member is disposed on the substrate layer, the separator member can block a further expansion of the through hole. The current collector can be further used even after the through hole is formed thereon, thereby prolonging service life of the current collector.

In some embodiments, the separator member is configured to divide the substrate layer into grid-like regions.

In the above technical solution, the substrate layer is divided by the separator member into grid-like regions. After the heat is transferred to the substrate layer to form the through hole on the current collector, the separator member can block the further expansion of the through hole. The current collector can be further used even after the through hole is formed thereon, thereby prolonging the service life of the current collector. Moreover, the separator member can well prevent the heat from diffusing to other regions on the substrate layer, allowing the heat to be transferred to positions on the substrate layer corresponding to the dendritic crystals and reducing the heat transferred to other regions on the substrate layer. As a result, the risk of heat diffusion to the current collector is further reduced, spread of heat on the current collector is further reduced, thereby further reducing the spread of thermal runaway in the battery cell and further improving the operational reliability of the battery cell.

In some embodiments, the separator member is disposed on a surface of the substrate layer and located between the substrate layer and the conductive layer.

In the above technical solution, the separator member is disposed between the substrate layer and the conductive layer. In this way, when the heat is transferred from the conductive layer to the substrate layer, the separator member can well prevent the heat from diffusing to other regions on the substrate layer, allowing the heat to be transferred to the positions on the substrate layer corresponding to the dendritic crystals and reducing the heat transferred to other regions on the substrate layer. As a result, the risk of heat diffusion to the current collector is further reduced, the spread of heat on the current collector is further reduced, thereby further reducing the spread of thermal runaway in the battery cell and further improving the operational reliability of the battery cell. Moreover, after the heat is transferred to the substrate layer to form the through hole on the current collector, the separator member can block the further expansion of the through hole.

In some embodiments, the separator member is formed as a coating; or the separator member is glued to the substrate layer.

In the above technical solution, by coating the separator member on an outer surface of the substrate layer, a separator member coating is formed on the outer surface of the substrate layer, thereby assembling the separator member on the substrate layer. In this way, the separator member and the substrate layer can be assembled in a simple and convenient way. By gluing the separator member to the substrate layer, the separator member can be fixed on the outer surface of the substrate layer, thereby reducing a risk of separation of the separator member from the substrate layer.

In some embodiments, the separator member is embedded in an interior of the substrate layer.

In the above technical solution, by embedding the separator member in the interior of the substrate layer, the separator member can well prevent the heat from diffusing to other regions on the substrate layer, and thus the heat can be concentrated to the positions on the substrate layer corresponding to the dendritic crystals, thereby accelerating the shrinkage at these positions. At the same time, a risk that the heat is transferred to other regions on the substrate layer can be reduced, thereby reducing the risk of heat diffusion to the current collector. Thus, the spread of heat on the current collector can be reduced, thereby further reducing the spread of thermal runaway in the battery cell and further improving the operational reliability of the battery cell.

In some embodiments, a ratio of a thickness of the separator member to a thickness of the substrate layer is C, C satisfying a relational expression of 0.8≤C≤1.1.

In the above technical solution, by setting the ratio of the thickness of the separator member to the thickness of the substrate layer to be C, the separator member can have an appropriate proportion in the current collector under the premise of ensuring performance of the separator member.

In some embodiments, a melting point of the separator member is D, D satisfying a relational expression of 180°≤D.

In the above technical solution, by setting the melting point of the separator member to be D, the melting point of the separator member can be ensured to be higher than the melting point of the substrate layer. After the short circuit in the battery cell occurs, the heat is transferred to the regions on the current collector corresponding to the dendritic crystals, and thus the through hole is formed on the current collector. Since the melting point of the separator member is higher than the melting point of the substrate layer, a risk of the separator member melting can be reduced.

In some embodiments, the separator member is a member made of polyimide.

In the above technical solution, the separator member is the member made of polyimide. As a result, the separator member is not easy to rupture under heat, and the separator member can have reliable working performance.

In some embodiments, the conductive layer is completely wrapped around a peripheral wall of the substrate layer.

In the above technical solution, the conductive layer is completely wrapped around the peripheral wall of the substrate layer. In this way, arrangement area of the conductive layer can be increased, and capacity of outputting current of the current collector can be improved.

In some embodiments, the conductive layer is a metal coating disposed on the substrate layer; or the conductive layer is adhered to the substrate layer.

In the above technical solution, a conductive layer coating is formed on the outer surface of the substrate layer by coating the conductive layer on the outer surface of the substrate layer. Further, an effect of assembling the conductive layer on the substrate layer is achieved, allowing the assembly of the separator member and the substrate layer to be simple and convenient. By adhering the conductive layer to the substrate layer, the conductive layer is fixed on the outer surface of the substrate layer, which reduces a risk of separation of the conductive layer from the substrate layer.

In some embodiments, the current collector further includes a first insulation layer disposed on a first surface of the conductive layer facing away from the substrate layer. The first insulation layer is configured to divide the first surface into a plurality of regions. A melting point of the first insulation layer is higher than a melting point of the conductive layer.

In the above technical solution, by providing the first insulation layer, the first surface is divided into a plurality of regions by the first insulation layer. The first insulation layer can reduce the heat diffusion to other regions on the substrate layer, allowing the heat to be transferred to the positions on the substrate layer corresponding to the dendritic crystals. At the same time, the risk of heat diffusion to the current collector is further reduced, thereby reducing the spread of thermal runaway in the battery cell and improving the operational reliability of the battery cell.

In some embodiments, the first insulation layer includes a plurality of intersectant insulation strips to define grid-like regions.

In the above technical solution, as the plurality of insulation strips define grid-like regions on the first surface, the plurality of insulation strips can well prevent the heat from diffusing to other regions on the conductive layer when the heat is transferred to the conductive layer, allowing the heat to be transferred to the positions on the conductive layer corresponding to the dendritic crystals. In this way, the heat can be transferred to the positions on the substrate layer corresponding to the dendritic crystals, reducing the heat transferred to other regions on the substrate layer. As a result, the risk of heat diffusion to the current collector is further reduced, the spread of heat on the current collector is further reduced, thereby further reducing the spread of thermal runaway in the battery cell and further improving the operational reliability of the battery cell.

In some embodiments, the first insulation layer is formed as a coating, or the first insulation layer is glued to the conductive layer.

In the above technical solution, the first insulation layer is formed on the first surface of the conductive layer by coating the first insulation layer on the first surface, thereby achieving an effect of assembling the first insulation layer on the conductive layer. Thus, the assembly of the first insulation layer and the conductive layer can be simple and convenient. By gluing the first insulation layer to the conductive layer, the first insulation layer is fixed on the outer surface of the conductive layer, which reduces a risk of separation of the conductive layer from the first insulation layer.

In a second aspect, the embodiments of the present disclosure provide a battery cell. The battery cell includes a positive electrode plate and a negative electrode plate. At least one of the positive electrode plate and the negative electrode plate includes the above-mentioned current collector.

In the above technical solution, at least one of the positive electrode plate and the negative electrode plate includes the current collector according to the above-mentioned embodiments. When the positive electrode plate and the negative electrode plate are short-circuited in a charging process of the battery cell, the heat is generated and transferred to the current collector. The substrate layer shrinks and ruptures under heat. With the rupture of the substrate layer, the conductive layer ruptures to form the through hole. For example, after the heat is transferred to the current collector, the positions on the substrate layer corresponding to the dendritic crystals shrink and rupture as a result of being heated, such that ruptures occurs at the positions on the conductive layer corresponding to the dendritic crystals. As a result, the through hole is formed on the current collector, and a short-circuit connection between the positive electrode plate and the negative electrode plate is cut off. The through hole penetrates the current collector in a thickness direction of the current collector, capable of lowering the risk of heat diffusion to the current collector, reducing the spread of heat on the current collector, and reducing the spread of thermal runaway in the battery cell. Thus, the operational reliability of the battery cell can be improved.

In some embodiments, the negative electrode plate is provided with the current collector.

In the above technical solution, by providing the negative electrode plate with the current collector, after the positive electrode plate and the negative electrode plate are short-circuited in the charging process of the battery cell, the heat is transferred to the negative electrode plate, and the through hole is formed on the negative electrode plate. In this way, the risk of heat diffusion to the current collector is reduced, spread of heat on the negative electrode plate is reduced, the spread of thermal runaway in the battery cell is reduced, thereby improving the operational reliability of the battery cell.

In some embodiments, the substrate layer has a greater elastic modulus than the separator.

In the above technical solution, since the elastic modulus of the substrate layer is greater than the elastic modulus of the separator, the through hole can have a sufficiently large cross-sectional area when the positive electrode plate and the negative electrode plate are short-circuited, to ensure that the positive electrode plate and the negative electrode plate are disconnected. As a result, a risk of a short-circuit between the positive electrode plate and the negative electrode plate as well as the risk of heat diffusion to the current collector are both reduced. In addition, the spread of heat on the current collector is reduced, the spread of thermal runaway in the battery cell is reduced, and further the operational reliability of the battery cell is improved.

In some embodiments, the elastic modulus of the substrate layer is B, and the elastic modulus of the separator is B1. B and B1 satisfy a relational expression of 0.8≤B/B1≤5.

In the above technical solution, by setting 0.8≤B/B1≤5, the substrate layer can have suitable shrinkage, which is favorable for the substrate layer to shrink and rupture after the short-circuit and the generation of heat in the battery cell. In addition, by reducing shrinkage of the separator, the separator can be reliably disposed between the positive electrode plate and the negative electrode plate. The positive electrode plate is separated from the negative electrode plate by the separator, thereby reducing the risk of the short-circuit between the positive electrode plate and the negative electrode plate.

In some embodiments, the battery cell is a sodium metal battery cell.

In the above technical solution, the sodium metal battery can be charged and discharged quickly, which can improve use performance of the battery cell. Moreover, due to extremely abundant sodium reserves and low cost, by employing the sodium metal battery as the battery cell, production cost of the battery cell can be reduced. At the same time, the sodium metal battery has high rate performance, and thus it can sufficiently satisfy the application under all climatic conditions.

In a third aspect, the embodiments of the present disclosure provide a battery. The battery includes the above-mentioned battery cell.

In a fourth aspect, the embodiments of the present disclosure provide an electrical device. The electrical device includes the above-mentioned battery, and the battery is configured to supply electrical energy.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

FIG. 1 is a schematic view of a vehicle according to an embodiment of the present disclosure;
FIG. 2 is a schematic view of a battery according to an embodiment of the present disclosure;
FIG. 3 is a schematic view of a battery cell according to an embodiment of the present disclosure;
FIG. 4 is a schematic view of a current collector having a conductive layer provided with a first insulation layer according to a first embodiment of the present disclosure;
FIG. 5 is a schematic view of a current collector formed with a through hole under heat according to a first embodiment of the present disclosure;
FIG. 6 is a schematic view of grid-like regions formed on a surface of a conductive layer of a current collector according to a first embodiment of the present disclosure;
FIG. 7 is a schematic view of a current collector having a substrate layer provided with separator members according to a second embodiment of the present disclosure;
FIG. 8 is a schematic view of a current collector formed with a through hole under heat according to a second embodiment of the present disclosure;
FIG. 9 is a schematic view of an electrode assembly formed by winding a positive electrode plate, a negative electrode plate, and a separator according to an embodiment of the present disclosure; and
FIG. 10 is a schematic view of an electrode assembly formed by laminating a positive electrode plate, a negative electrode plate, and a separator according to an embodiment of the present disclosure.

### DETAILED DESCRIPTION

Embodiments of the present disclosure will be described in detail below with reference to examples thereof as illustrated in the accompanying drawings, throughout which the same or similar elements, or elements having the same or similar functions, are denoted with the same or similar reference numerals. The embodiments described below with reference to the drawings are merely illustrative, for explaining, rather than limiting, the present disclosure.

In order to clarify the purpose, technical solution, and advantages in the embodiments of the present disclosure, reference will be made clearly to technical solutions in the embodiments of the present disclosure with accompanying drawings. Obviously, the embodiments described herein are only part of the embodiments of the present disclosure and are not all the embodiments of the present disclosure. Based on the embodiments of the present disclosure, other embodiments obtained by those skilled in the art without paying creative labor shall fall within scope of the present disclosure.

Unless otherwise defined, all technical and scientific terms used in the present disclosure have the same meanings known to those skilled in the art. The terms used in the specification of the present disclosure are only for the purpose of describing specific embodiments and are not intended to limit the present disclosure. The terms "including", "comprising", "having", and any variations thereof in the specification, claims, and description of the above-mentioned drawings of the present disclosure are intended to cover non-exclusive inclusions. The terms "first", "second", and the like in the specification, claims, and description of the above-mentioned drawings of the present disclosure are used to distinguish different objects, rather than defining a specific order or a primary and secondary relationship.

Reference to "embodiment" or "example" in the present disclosure means that particular features, structures, or characteristics described in conjunction with embodiments may be included in at least one embodiment of the present disclosure. The appearances of this phrase in various places in the specification refer to neither the same embodiment nor separate or alternative embodiments mutually exclusive of other embodiments.

In the present disclosure, it should be noted that, unless otherwise clearly specified and limited, terms such as "install", "assemble", "connect", "connect to", "attach to", and the like should be understood in a broad sense. For example, they may refer to a fixed connection or a detachable connection or connection as one piece; direct connection or indirect connection through an intermediate; or internal communication of two components. For those skilled in the art, the specific meaning of the above-mentioned terms in the present disclosure can be understood according to specific circumstances.

The term "and/or" in the present disclosure is merely a description of an association relationship between associated objects, indicating that three relationships may exist. For example, A and/or B may represent three situations: A exists alone, A and B exist at the same time, and B exists alone. In addition, the character "/" in the present disclosure generally indicates that the preceding and following associated objects are in an "or" relationship.

In the embodiments of the present disclosure, the same reference numerals represent the same components, and for the sake of brevity, detailed descriptions of the same components are omitted in different embodiments. It should be understood that the thickness, length, width, and other dimensions of various components in the embodiments of the present disclosure illustrated in the drawings, as well as the overall thickness, length, width, and other dimensions of the integrated device are only exemplary and should not constitute any limitation to the present disclosure.

The term "plurality of" used in the present disclosure refers to two or more (including two).

In embodiments of the present disclosure, the battery cell may be a secondary battery. The secondary battery refers to a battery cell that can be continuously used by activating active materials with charging after the battery cell is discharged.

In the present disclosure, the battery cell may be a lithium-ion battery, a sodium-ion battery, a sodium-lithium-ion battery, a lithium metal battery, a sodium metal battery, a lithium-sulfur battery, a magnesium-ion battery, a nickel-hydride battery, a nickel-cadmium battery, a lead-acid battery, and the like. The embodiments of the present disclosure are not limited to this.

The battery cell generally includes an electrode assembly. The electrode assembly includes a positive electrode, a negative electrode, and a separator member. During a charging and discharging process of the battery cell, active ions (such as lithium ions) are intercalated and deintercalated back and forth between the positive electrode and the negative electrode. The separator member is arranged between the positive electrode and the negative electrode, which may play a role in preventing the positive electrode and the negative electrode from being short-circuited while allowing the active ions to pass through.

In some embodiments, the positive electrode may be a positive electrode plate. The positive electrode plate may include a positive current collector and a positive active material disposed on at least one surface of the positive current collector.

In some embodiments, the negative electrode may be a negative electrode plate. The negative electrode plate may include a negative current collector and a negative active material disposed on at least one surface of the negative current collector. In some embodiments, the negative electrode may be a foam metal. The foam metal may be nickel foam, copper foam, aluminum foam, foam alloy, or carbon foam. When the foam metal is used as the negative electrode plate, a surface of the foam metal may be provided with or without the negative electrode active material.

As an example, the negative current collector may be further filled or/and deposited with a lithium source material, a potassium metal, or a sodium metal. The lithium source material is a lithium metal and/or a lithium-rich material.

In some embodiments, the separator member is a separator. The type of the separator is not specifically limited in the present disclosure. Any well-known separator with a porous structure having good chemical stability and mechanical stability may be selected as the separator.

As an example, the main material of the separator may be selected from at least one of glass fiber, non-woven fabric, polyethylene, polypropylene, polyvinylidene fluoride, and ceramic. The separator may be a single-layer film or a multi-layer composite film, which is not specifically limited herein. When the separator is the multi-layer composite film, each layer may be made of the same or different materials, which is not specifically limited herein. The separator member may be a separate component located between the positive electrode and the negative electrode, or may be attached to surfaces of the positive electrode and the negative electrode.

In the present disclosure, the battery cell may be in the shape of a cylinder, a flat body, a cuboid, or other shapes, which is not limited in the embodiments of the present disclosure. The battery cells can be generally divided into three types based on encapsulation manner, i.e., cylindrical battery cell, square battery cell, and soft-pack battery cell, which is not limited in the embodiments of the present disclosure.

The battery mentioned in the embodiments of the present disclosure refers to a single physical module including one or more battery cells to provide higher voltage and capacity. For example, the battery mentioned in the present disclosure may include a battery module or a battery pack. The battery generally includes a case for encapsulating one or more battery cells or a plurality of battery modules. The case may include an upper case and a lower case. The case can prevent liquid or other foreign matter from affecting charging or discharging of the battery cell.

In recent years, new energy vehicles have developed by leaps and bounds. In the field of electric vehicles, power batteries, as a power source of the electric vehicles, play an irreplaceable and important role. The battery is composed of a case and a plurality of battery cells accommodated in the case. The battery, as the core component of the new energy vehicles, is highly required in terms of safety and cycle service life.

In a common power battery, dendritic crystals are deposited on the surface of the electrode plate during a charging process of the battery. The dendritic crystals, after penetrating the separator, connect the negative electrode plate to the positive electrode plate, resulting in a short-circuit in the battery cell, which is likely to cause a thermal runaway in the battery cell. As a result, the operational reliability of the battery cell is reduced.

Based on the above considerations, in order to solve the problem that the dendritic crystals deposited on the surface of the electrode plate cause a short-circuit of the battery cells and further result in the thermal runaway in the battery cells, inventors designed a current collector based on intensive study. The current collector may be a current collector of the positive electrode plate. The current collector may also be a current collector of the negative electrode plate. The current collector may also be the negative electrode plate. As an example, the current collector is the current collector of the negative electrode plate in the present disclosure, for illustration. In the embodiments of the present disclosure, the negative electrode plate is not provided with an active substance layer. In the present disclosure, a melting point of the substrate layer is lower than a melting point of the conductive layer. During the charging process of the battery cell, the dendritic crystals formed on the current collector penetrate the separator, which results in a short-circuit of the battery cell and generation of heat. The substrate layer shrinks and ruptures under heat, and thus the conductive layer ruptures to form a through hole. In this way, a risk of heat diffusion to the current collector and a risk of thermal runaway in the battery cell are lowered, thereby improving the operational reliability of the battery cell.

The batteries disclosed in the embodiments of the present disclosure may be used in, but not limited to, electrical devices such as vehicles, ships, or aircraft. A battery thermal management system, a battery, and the like as disclosed in the present disclosure may be used to form a power system of the electrical device, which is conducive to broadening application scope of the battery thermal management system and reducing assembly difficulty of the battery thermal management system.

The embodiments of the present disclosure provide an electrical device using a battery as a power source. The electrical device may be, but not limited to, a mobile phone, a tablet, a laptop computer, an electric toy, an electric tool, an electric vehicle, an electric car, a ship, a spacecraft, etc. The electric toy may include fixed or mobile electric toys, such as game machine, electric car toys, electric ship toys, electric airplane toys, etc. The spacecraft may include airplanes, rockets, space shuttles, spaceships, etc.

For the convenience of description, the following embodiments are described by taking an electric device according to an embodiment of the present disclosure being a vehicle as an example.

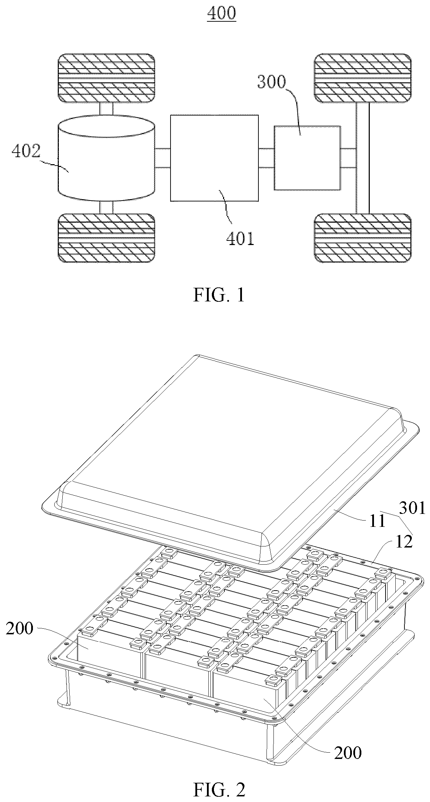

Referring to FIG. 1, FIG. 1 is a schematic structural view of a vehicle according to some embodiments of the present disclosure. The vehicle 400 may be a fuel vehicle, a gas vehicle, or a new energy vehicle. The new energy vehicle may be a pure electric vehicle, a hybrid vehicle, an extended-range electric vehicle, or the like. A battery 300 is provided in the vehicle 400. The battery 300 may be disposed at the bottom, head, or tail of the vehicle 400. The battery 300 can be configured to supply the vehicle 400 with power. For example, the battery 300 can be used as an operation power source of the vehicle 1000 for a circuit system of the vehicle 400, for example, for satisfying the start, navigation, and operating power requirements of the vehicle 400.

The vehicle 400 may further include a controller 401 and a motor 402. The controller 401 is configured to control the battery 300 to supply the motor 402 with electrical energy, for example, for satisfying the start, navigation, and operating power requirements of the vehicle 400.

In some embodiments of the present disclosure, in addition to serving as the operation power source for the vehicle 400, the battery 300 can be further used as a drive power source for the vehicle 400, for completely or partially replacing fuel oil or natural gas to provide drive power for the vehicle 400.

Referring to FIG. 2, FIG. 2 is an exploded view of a battery 300 according to some embodiments of the present disclosure. The battery 300 includes a case 301 and battery cells 200. The battery cells 200 are accommodated in the case 301. The case 301 is configured to provide an accommodation space for the battery cells 200. The case 301 may have a variety of structures. In some embodiments, the case 301 may include a first part 11 and a second part 12. The first part 11 and the second part 12 cover each other. The first part 11 and the second part 12 jointly define the accommodation space for accommodating the battery cells 200. The second part 12 may be a hollow structure with an opening at one end. The first part 11 may be a plate-like structure. The first part 11 covers an opening side of the second part 12, enabling the first part 11 and the second part 12 to jointly define the accommodation space. The first part 11 and the second part 12 may both be a hollow structure with an opening at one end. An opening side of the first part 11 covers an opening side of the second part 12. Of course, the case 301 formed by the first part 11 and the second part 12 may have a variety of shapes, such as cylinder, cuboid, etc.

In the battery 300, there may be a plurality of battery cells 200. The plurality of battery cells 200 may be connected in series, in parallel, or in a parallel-series connection. The parallel-series connection means that some of the plurality of battery cells 200 are connected in series and some of the plurality of battery cells 200 are connected in parallel. The plurality of battery cells 200 may be directly connected in series or in parallel or in the parallel-series connection, and then the plurality of battery cells 200, as a whole, is accommodated in the case 301. Of course, the battery 300 may be in the form of battery modules composed of the plurality of battery cells 200 first connected in series, parallel, or in the parallel-series connection. Then, the battery modules are connected in series, parallel, or in the parallel-series connection as a whole, which is accommodated in the case 301. The battery 300 may further include other structures. For example, the battery 300 may further include a busbar component. The busbar component may be a plurality of electrical connectors for realizing electrical connection between the plurality of battery cells 200.

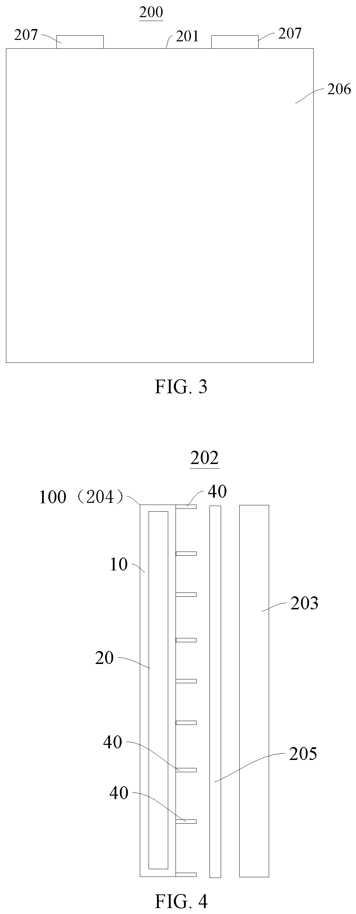

Referring to FIG. 3, FIG. 3 is a schematic view of an exploded structure of a battery cell 200 according to some embodiments of the present disclosure. The battery cell 200 refers to the smallest unit for constituting the battery 300. As illustrated in FIG. 3, the battery cell 200 includes an end cover 201, a housing 206, an electrode assembly 202, and other functional components, such as a current collection member.

The end cover 201 refers to a component that covers an opening of the housing 206 to isolate an internal environment of the battery cell 200 from an external environment. Without limitation, a shape of the end cover 201 may be adapted to a shape of the housing 206 to fit the housing 206. Optionally, the end cover 201 may be made of a material with a certain hardness and strength (such as aluminum alloy). In this way, the end cover 201 is less likely to deform when subjected to extrusion and collision, and thus the battery cell 200 has higher structural strength and enhanced safety performance. The functional components such as an electrode terminal 207 may be provided on the end cover 201. The electrode terminal 207 may be configured to be electrically connected to the electrode assembly 202 for outputting or inputting the electrical energy of the battery cell 200. In some embodiments, the end cover 201 may also be provided with a pressure relief mechanism for releasing internal pressure when internal pressure or temperature of the battery cell 200 reaches a threshold value. The end cover 201 may be made of a variety of materials, such as copper, iron, aluminum, stainless steel, aluminum alloy, plastic, etc., which are not specifically limited in the embodiments of the present disclosure. In some embodiments, an insulation member may further be provided on an inner side of the end cover 201. The insulation member may be configured to isolate electrical connection components in the housing 206 from the end cover 201 to reduce the risk of the short-circuit. For example, the insulation member may be plastic, rubber, etc.

The housing 206 is a component configured to form the internal environment of the battery cell 200 by fitting the end cover 201. The formed internal environment may be used to accommodate the electrode assembly 202, an electrolyte, and other components. The housing 206 and the end cover 201 may be independent components. The housing 206 may have an opening. The end cover 201 covers the opening to form the internal environment of the battery cell 200. Without limitation, the end cover 201 and the housing 206 may be formed as one piece. Specifically, the end cover 201 and the housing 206 may first form a common connection surface before other components are placed into the housing. When the interior of the housing 206 is required to be encapsulated, the end cover 201 covers the housing 206. The housing 206 may have a variety of shapes and sizes, such as a cuboid, a cylinder, a hexagonal prism, and the like. Specifically, the shape of the housing 206 may be determined based on the specific shape and size of the electrode assembly 202. The housing 206 may be made of a variety of materials, such as copper, iron, aluminum, stainless steel, aluminum alloy, plastic, etc., which are not specifically limited in the embodiments of the present disclosure.

The electrode assembly 202 is a component in the battery cell 200 where electrochemical reactions occur. The housing 206 may include one or more electrode assemblies 202. The electrode assembly 202 is mainly formed by winding or laminating the positive electrode plate 203 and the negative electrode plate 204. The separator 205 is commonly disposed between the positive electrode plate 203 and the negative electrode plate 204. A part of the electrode plate having an active substance or configured to carry the active substance constitutes a main body part of the electrode assembly 202. Other parts of the electrode plate that does not have the active substance or is not configured to carry the active substance each constitutes a tab. A positive electrode tab and a negative electrode tab may be both located at one same end of the main body part or respectively located at both ends of the main body part. During the charging and discharging process of the battery 300, ions in the active substance shuttle between the positive electrode and the negative electrode. The tabs are connected to the electrode terminals 207 to form a current loop.

In some examples, the tabs of the electrode assembly 202 are located on an upper side of the main body part. The end cover 201 is located above the electrode assembly 202, enabling the electrode terminal 207 to be located at an upper end of the battery cell 200, and enabling the tabs to be connected to the electrode terminal 207. In some examples, the tabs of the electrode assembly 202 are located on the upper side of the main body part, and the end cover 206 is located on a right side of the electrode assembly 202, enabling the electrode terminal 207 to be located on side surfaces of the battery cell 200. The tabs are connected to the electrode terminals 207 through the current collection member. The current collection member is in a bending shape to connect the tabs on the upper and lower end surfaces of the electrode assembly 202 to the electrode terminals 207 on the side surfaces.

The electrode assembly 202 is the component in the battery cell 200 where electrochemical reactions occur. The housing 206 may include one or more electrode assemblies 202. The electrode assembly 202 is mainly formed by winding or laminating the positive electrode plate 203 and the negative electrode plate 204. The separator member is commonly provided between the positive electrode plate 203 and the negative electrode plate 204. During the charging and discharging process of the battery cell 200, ions in the active substance shuttle between the positive electrode and the negative electrode to form a current loop.

The current collector 100 according to embodiments of the present disclosure is described below with reference to FIG. 1 to FIG. 10. As an example, in the following description, the current collector 100 is used as the negative electrode plate 204 of the battery cell 200 for illustration.

As illustrated in FIG. 4 to FIG. 8, the present disclosure provides a current collector 100. The current collector 100 includes a conductive layer 10 and a substrate layer 20. The conductive layer 10 is configured to output current. The substrate layer 20 is attached to a part of the conductive layer 10. A melting point of the substrate layer 20 is lower than a melting point of the conductive layer 10. The substrate layer 20 is configured to shrink and rupture under heat, enabling the conductive layer 10 to rupture to form a through hole 21.

The substrate layer 20 is connected to the conductive layer 10. The conductive layer 10 may be disposed on the outer surface of the substrate layer 20, and current is output outwardly through the conductive layer 10. Since the melting point of the substrate layer 20 is lower than the melting point of the conductive layer 10, when temperature of the substrate layer 20 reaches a certain temperature, the substrate layer 20 melts and ruptures before the conductive layer 10 does. In this way, the substrate layer 20 can be configured to shrink and rupture under heat, enabling the conductive layer 10 to rupture to form the through hole 21. The through hole 21 can reduce the heat diffusion on the current collector 100. It should be noted that the current collector 100 can works properly even when the through hole 21 is formed on the current collector 100.

During the charging process of the battery cell 200, metal ions are deposited on the negative electrode plate 204 to form the dendritic crystals. The dendritic crystals penetrate the separator 205, and the dendritic crystals are connected between the positive electrode plate 203 and the negative electrode plate 204, thereby leading to a short-circuit between the positive electrode plate 203 and the negative electrode plate 204. After the positive electrode plate 203 and the negative electrode plate 204 are short-circuited, the heat is generated and transferred to the current collector 100. The substrate layer 20 shrinks and ruptures under heat. With the rupture of the substrate layer 20, the conductive layer 10 ruptures to form the through hole 21. For example, after the heat is transferred to the current collector 100, the positions on the substrate layer 20 corresponding to the dendritic crystals shrink and rupture as a result of being heated, enabling the positions on the conductive layer 10 corresponding to the dendritic crystals to rupture. In this way, the through hole 21 can be formed on the current collector 100. The through hole 21 penetrates the current collector 100 in a thickness direction of the current collector 100. After the through hole 21 is formed, the positive electrode plate 203 and the negative electrode plate 204 are disconnected, preventing the positive electrode plate 203 and the negative electrode plate from being short-circuited. As a result, the risk of heat diffusion to the current collector 100 is lowered, and the spread of heat on the current collector 100 and the spread of thermal runaway in the battery cell 200 are reduced, thereby improving the operational reliability of the battery cell 200.

The conductive layer 10 is configured to conduct the current of the electrode plate, and may be aluminum or other conductive materials.

In the above technical solution, by setting the melting point of the substrate layer 20 to be lower than the melting point of the conductive layer 10, after the dendritic crystals formed on the current collector 100 penetrate the separator 205 and lead to the short-circuit in the battery cell 200 to generate heat in the charging process of the battery cell, the substrate layer 20 can shrink and rupture under heat, enabling the conductive layer 10 to rupture to form the through hole 21. In this way, the risk of heat diffusion to the current collector 100 and the risk of thermal runaway in the battery cell 200 can be reduced, and the operational reliability of the battery cell 200 can be improved.

In some embodiments, the melting point of the substrate layer is A, A satisfying a relational expression of 110°C≤A≤130°C.

The melting point of the substrate layer 20 may be a value of 110°C, 115°C, 116°C, 120°C, 130°C, etc.

In the above technical solution, by setting the melting point of the substrate layer 20 to be A, the substrate layer 20 can have a lower melting point. Subsequent to the generation of heat caused by the short-circuit in the battery cell 200, the substrate layer 20 can shrink and rupture, thereby forming the through hole 21 on the current collector 100. In addition, the substrate layer 20 does not rupture when the battery cell 200 works properly.

In some embodiments, an elastic modulus of the substrate layer 20 is B, B satisfying a relational expression of B≥15MPa.

The elastic modulus of the substrate layer 20 may be a value of 15MPa, 20MPa, 30MPa, etc.

In the above technical solution, by setting the elastic modulus of the substrate layer 20 to be B, the substrate layer 20 can have a suitable shrinkage, which is favorable for the shrining and rupture of the substrate layer 20 subsequent to the generation of heat caused by the short-circuit in the battery cell 200.

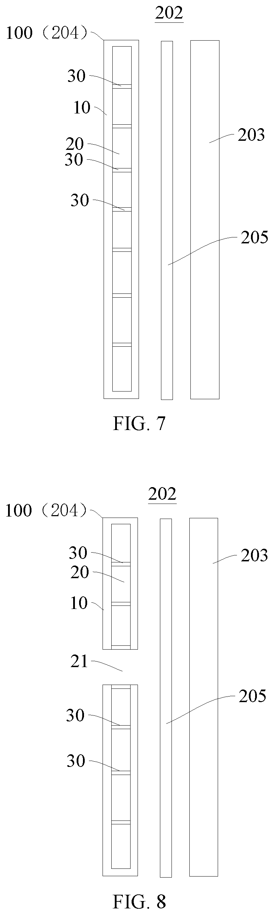

In some embodiments, as illustrated in FIG. 7 and FIG. 8, the current collector 100 further includes separator members 30 disposed on the substrate layer 20. The separator members 30 are configured to divide the substrate layer 20 into a plurality of regions. The separator member 30 has a higher melting point than the substrate layer 20.

The separator member 30 may be disposed on the outer surface of the substrate layer 20, or the separator member 30 may be disposed in an interior of the substrate layer 20, or the separator member 30 is disposed on the outer surface of the substrate layer 20 and in the interior of the substrate layer 20. The substrate layer 20 is separated into the plurality of regions by separator member 30. The separator member 30 has a higher melting point than the substrate layer 20.

During the charging process of the battery cell 200, the metal ions are deposited on the negative electrode plate 204 to form the dendritic crystals. The dendritic crystals penetrate the separator 205, and the dendritic crystals are connected between the positive electrode plate 203 and the negative electrode plate 204, leading to the short-circuit between the positive electrode plate 203 and the negative electrode plate 204. After the positive electrode plate 203 and the negative electrode plate 204 are short-circuited, the heat is generated and transferred to the current collector 100. The regions on the current collector 100 corresponding to the dendritic crystals shrink and rupture under heat, enabling the conductive layer 10 to rupture. In this way, the through hole 21 is formed in the regions on the current collector 100 corresponding to the dendritic crystals, and the short-circuited positive electrode and negative electrode can be disconnected. Moreover, since the separator member 30 has a higher melting point than the substrate layer 20, when the heat is transferred to the substrate layer 20, the separator member 30 can prevent the heat from diffusing to other regions on the substrate layer 20, and thus the heat can be transferred to the positions on the substrate layer 20 corresponding to the dendritic crystals and the heat transferred to other regions on the substrate layer 20 can be reduced. As a result, the risk of heat diffusion to the current collector 100 is further lowered, and the spread of heat on the current collector 100 and the spread of thermal runaway in the battery cell 200 are further reduced, thereby further improving the operational reliability of the battery cell 200. Since the separator member 30 is disposed on the substrate layer 20, the separator member 30 can block the further expansion of the through hole 21. The current collector 100 can be further used even after the through hole 21 is formed thereon, thereby prolonging the service life of the current collector 100. It should be noted that the through hole 21 is not formed on regions of the current collector 100 not directly subjected to the heat, and that the current collector 100 is intact at positions where no through hole 21 is formed. Even if the through hole 21 is formed on some regions of the current collector 100, the current collector 100 can further work properly, thereby prolonging the service life of the current collector 100.

In the above technical solution, by providing the separator member 30, after the short-circuit in the battery cell 200 occurs, the heat is transferred to the regions on the current collector 100 corresponding to the dendritic crystals, and the through hole 21 is formed on the current collector 100. Since the separator member 30 is disposed on the substrate layer 20, the separator member 30 can block the further expansion of the through hole 21. The current collector 100 can be further used even after the through hole 21 is formed thereon, thereby prolonging the service life of the current collector 100.

In some embodiments, the separator member 30 is configured to divide the substrate layer 20 into grid-like regions.

There may be a plurality of separator members 30, and the plurality of separator members 30 intersect each other to divide the substrate layer 20 into grid-like regions. The substrate layer 20 is divided into grid-like regions by the separator member 30, such that at least one region is surrounded by the separator member 30. In the charging process of the battery cell 200, after the positive electrode plate 203 and the negative electrode plate 204 are short-circuited, the heat is generated and transferred to the current collector 100, and the regions on the current collector 100 corresponding to the dendritic crystals shrink and rupture under heat, enabling the conductive layer 10 to rupture. In this way, the through hole 21 is formed in the regions on the current collector 100 corresponding to the dendritic crystals, and thus the positive electrode plate 203 and the negative electrode plate 204 are disconnected. Moreover, when the heat is transferred to the substrate layer 20, the separator member 30 can well prevent the heat from diffusing to other regions on the substrate layer 20, allowing the heat to be transferred to the positions on the substrate layer 20 corresponding to the dendritic crystals and reducing the heat transferred to other regions on the substrate layer 20. As a result, the risk of heat diffusion to the current collector 100 is further reduced, and the spread of heat on the current collector 100 and the spread of thermal runaway in the battery cell 200 are further reduced, thereby further improving the operational reliability of the battery cell 200. In addition, after the heat is transferred to the substrate layer 20 to form the through hole 21 on the current collector 100, the separator member 30 can block the further expansion of the through hole 21. The current collector 100 can be further used even after the through hole 21 is formed thereon, thereby prolonging the service life of the current collector 100.

In the above technical solution, by dividing the substrate layer 20 into the grid-like regions with the separator member 30, the separator member 30 can block the further expansion of the through hole 21 after the heat is transferred to the substrate layer 20 to form the through hole 21 on the current collector 100, and the current collector 100 can be further used even after the through hole 21 is formed thereon, thereby prolonging the service life of the current collector 100. When the heat is transferred to the substrate layer 20, the separator member 30 can well prevent the heat from diffusing to other regions on the substrate layer 20, allowing the heat to be transferred to the positions on the substrate layer 20 corresponding to the dendritic crystals and reducing the heat transferred to other regions on the substrate layer 20. As a result, the risk of heat diffusion to the current collector 100 is further lowered, and the spread of heat on the current collector 100 and the spread of thermal runaway in the battery cell are further reduced, thereby further improving the operational reliability of the battery cell.

In some embodiments, the separator member 30 is disposed on a surface of the substrate layer 20 and located between the substrate layer 20 and the conductive layer 10.

The separator member 30 is disposed on the outer surface of the substrate layer 20, and the separator member 30 is located between the substrate layer 20 and the conductive layer 10. When the heat is transferred from the conductive layer 10 to the substrate layer 20, by disposing the separator member 30 between the substrate layer 20 and the conductive layer 10, the separator member 30 can well prevent the heat from diffusing to other regions on the substrate layer 20, allowing the heat to be transferred to the positions on the substrate layer 20 corresponding to the dendritic crystals and reducing the heat transferred to other regions on the substrate layer 20. As a result, the risk of heat diffusion to the current collector 100 is further lowered, and the spread of heat on the current collector 100 and the spread of thermal runaway in the battery cell are further reduced, thereby further improving the operational reliability of the battery cell.

In the above technical solution, by disposing the separator member 30 between the substrate layer 20 and the conductive layer 10, when the heat is transferred from the conductive layer 10 to the substrate layer 20, the separator member 30 can well prevent the heat from diffusing to other regions on the substrate layer 20, allowing the heat to be transferred to the positions on the substrate layer 20 corresponding to the dendritic crystals and reducing the heat transferred to other regions on the substrate layer 20. As a result, the risk of heat diffusion to the current collector 100 is further reduced, and the spread of heat on the current collector 100 and the spread of thermal runaway in the battery cell 200 are further reduced, thereby further improving the operational reliability of the battery cell. Moreover, after the heat is transferred to the substrate layer 20 to form the through hole 21 on the current collector 100, the separator member 30 can block the further expansion of the through hole 21.

In some embodiments, the separator member 30 is formed as a coating, or the separator member 30 is glued to the substrate layer 20.

The separator member 30 may be coated on the outer surface of the substrate layer 20, thereby forming a coating of the separator member 30 on the outer surface of the substrate layer 20. In this way, an effect of assembling the separator member 30 on the substrate layer 20 can be achieved. Alternatively, the separator member 30 is glued to the outer surface of the substrate layer 20. In this way, the separator member 30 is fixed on the outer surface of the substrate layer 20, reducing a risk of separation of the separator member 30 from the substrate layer 20.

In the above technical solution, by coating the separator member 30 on the outer surface of the substrate layer 20 to form the coating of the separator member 30 on the outer surface of the substrate layer 20, the effect of assembling the separator member 30 on the substrate layer 20 is achieved, allowing the assembly of the separator member 30 and the substrate layer 20 to be simple and convenient. By gluing the separator member 30 to the substrate layer 20, the separator member 30 is fixed on the outer surface of the substrate layer 20, which reduces the risk of separation of the separator member 30 from the substrate layer 20.

In some embodiments, as illustrated in FIG. 7 and FIG. 8, the separator member 30 is embedded in an interior of the substrate layer 20.

The separator member 30 is disposed in the interior of the substrate layer 20, and there may be a plurality of separator members 30 disposed in the interior of the substrate layer 20. As illustrated in FIG. 8, the plurality of separator members 30 is parallel to each other and arranged at intervals. The substrate layer 20 is divided into a plurality of regions by the plurality of separator members 30. When the heat is transferred from the conductive layer 10 to the substrate layer 20, the positions on the substrate layer 20 corresponding to the dendritic crystals shrink and rupture under heat. With the rupture of the substrate layer 20, the conductive layer 10 ruptures to form the through hole 21. By embedding the separator member 30 in the interior of the substrate layer 20, the separator member 30 can well prevent the heat from diffusing to other regions on the substrate layer 20. In this way, the heat is concentrated on the positions on the substrate layer 20 corresponding to the dendritic crystals, thereby accelerating the shrinkage at these positions. At the same time, a risk of the heat being transferred to other regions on the substrate layer 20 is reduced, and thus the risk of heat diffusion to the current collector 100 is reduced. Therefore, the spread of heat on the current collector 100 and the spread of thermal runaway in the battery cell are further reduced, thereby further improving the operational reliability of the battery cell.

In the above technical solution, the separator member 30 is embedded in the interior of the substrate layer 20. The separator member 30 can well prevent the heat from diffusing to other regions on the substrate layer 20, and thus the heat is transferred to the positions on the substrate layer 20 corresponding to the dendritic crystals, which accelerates the shrinkage at these positions. At the same time, the risk of the heat being transferred to other regions on the substrate layer 20 is reduced, and the risk of heat diffusion to the current collector 100 is reduced. In this way, the spread of heat on the current collector 100 is further reduced, and this the spread of thermal runaway in the battery cell is further reduced, thereby further improving the operational reliability of the battery cell.

In some embodiments, a ratio of a thickness of the separator member 30 to a thickness of the substrate layer 20 is C, C satisfying a relational expression of 0.8≤C≤1.1.

The ratio C of the thickness of the separator member 30 to the thickness of the substrate layer 20 may be a value such as 0.8, 0.9, 1.1, etc.

In the above technical solution, by setting the ratio C of the thickness of the separator member 30 to the thickness of the substrate layer 20 to satisfy 0.8≤C≤1.1, a proportion of the separator member 30 in the current collector 100 can be appropriate under the premise of ensuring the performance of the separator member 30.

In some embodiments, a melting point of the separator member 30 is D, D satisfying a relational expression of 180°≤D.

The melting point of the separator member 30 may be a value of 180°, 190°, 200°, etc. The melting point of the separator member 30 can be appropriately selected according to actual application conditions.

In the above technical solution, by setting the melting point of the separator member 30 to be D, the melting point of the separator member 30 can be ensured to be higher than the melting point of the substrate layer 20. After the short-circuit in the battery cell 200, the heat is transferred to the regions on the current collector 100 corresponding to the dendritic crystals, and the through hole 21 is formed on the current collector 100. Since the melting point of the separator member 30 is higher than the melting point of the substrate layer 20, a risk of the separator member 30 melting can be lowered.

In some embodiments, the separator member 30 is a member made of polyimide.

The member made of polyimide is resistant to high temperatures of 400°C or higher. The member made of polyimide has high insulation properties and is low cost.

In the above technical solution, by setting the separator member 30 to be the member made of polyimide, the separator member 30 is not prone to rupture under heat, and the separator member 30 can have reliable working performance. Moreover, the production cost of the current collector 100 can also be reduced.

In some embodiments, the conductive layer 10 is completely wrapped around a peripheral wall of the substrate layer 20.

The peripheral wall of the substrate layer 20 refers to the outer surface of the substrate layer 20. The entire outer peripheral wall of the substrate layer 20 is provided with the conductive layer 10. By wrapping the conductive layer 10 around the entire peripheral wall of the substrate layer 20, an arrangement area of the conductive layer 10 can be increased, and a capacity of outputting current of the current collector 100 can be enhanced.

In the above technical solution, by wrapping the conductive layer 10 around the entire peripheral wall of the substrate layer 20, the arrangement area of the conductive layer 10 can be increased, and the capacity of outputting current of the current collector 100 can be enhanced.

In some embodiments, the conductive layer 10 is a metal coating disposed on the substrate layer 20, or the conductive layer 10 is adhered to the substrate layer 20.

The conductive layer 10 may be coated on the outer surface of the substrate layer 20, to form a coating of the conductive layer 10 on the outer surface of the substrate layer 20, thereby achieving the effect of assembling the conductive layer 10 on the substrate layer 20. Alternatively, the conductive layer 10 is glued to the outer surface of the substrate layer 20, to fix the conductive layer 10 to the outer surface of the substrate layer 20, thereby reducing the risk of separation of the conductive layer 10 from the substrate layer 20.

In the above technical solution, by coating the conductive layer 10 on the outer surface of the substrate layer 20, the coating of the conductive layer 10 is formed on the outer surface of the substrate layer 20, thereby achieving the effect of assembling the conductive layer 10 on the substrate layer 20. In this way, the assembly of the separator member 30 and the substrate layer 20 is simple and convenient. By gluing the conductive layer 10 to the substrate layer 20, the conductive layer 10 is fixed on the outer surface of the substrate layer 20, thereby reducing the risk of separation of the conductive layer 10 from the substrate layer 20.

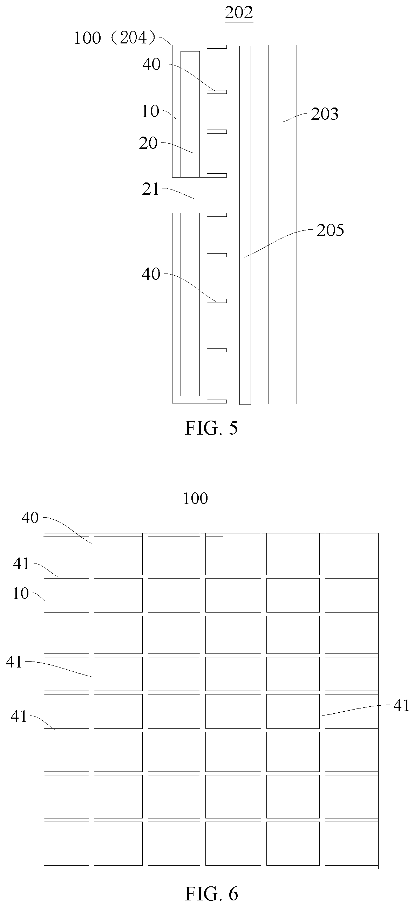

In some embodiments, as illustrated in FIG. 4 and FIG. 5, the current collector 100 further includes a first insulation layer 40. The first insulation layer 40 is disposed on a first surface of the conductive layer 10 facing away from the substrate layer 20. The first insulation layer 40 is configured to divide the first surface into a plurality of regions. The first insulation layer 40 has a higher melting point than the conductive layer 10.

As illustrated in FIG. 4, the first insulation layer 40 has functions of isolation and heat insulation. A surface of the conductive layer 10 facing the separator 205 is the first surface of the conductive layer 10 facing away from the substrate layer 20. The first insulation layer 40 is disposed on the first surface. The first insulation layer 40 may be adhered to the first surface, or the first insulation layer 40 may also be coated on the first surface. There may be a plurality of first insulation layers 40, and the plurality of first insulation layers 40 is all disposed on the first surface. The first surface is divided into a plurality of regions by the first insulation layer 40.

During the charging process of the battery cell 200, the metal ions are deposited on the negative electrode plate 204 to form the dendritic crystals. The dendritic crystals penetrate the separator 205, and the dendritic crystals are connected between the positive electrode plate 203 and the negative electrode plate 204, leading to the short-circuit between the positive electrode plate 203 and the negative electrode plate 204. After the positive electrode plate 203 and the negative electrode plate 204 are short-circuited, the heat is generated and transferred to the current collector 100. The regions on the current collector 100 corresponding to the dendritic crystals shrink and rupture under heat, such that the conductive layer 10 ruptures. In this way, the through hole 21 is formed in the regions on the current collector 100 corresponding to the dendritic crystals, and thus the positive electrode plate 203 and the negative electrode plate 204 are disconnected. Moreover, due to the higher melting point of the first insulation layer 40 than that of the conductive layer 10, rupture of the first insulation layer 40 is avoided when the heat is transferred to the substrate layer 20. The first insulation layer 40 can prevent the heat from diffusing to other regions on the substrate layer 20, allowing the heat to be transferred to the positions on the substrate layer 20 corresponding to the dendritic crystals and reducing the heat transferred to other regions on the substrate layer 20. As a result, the risk of heat diffusion to the current collector 100 is further reduced, and the spread of heat on the current collector 100 and thus the spread of thermal runaway in the battery cell 200 are further reduced, thereby further improving the operational reliability of the battery cell 200. At the same time, since the first insulation layer 40 has the properties of insulation, if the first insulation layer 40 is in contact with the positive electrode plate 203, it is avoided that the first insulation layer 40 connects the positive electrode plate 203 and the negative electrode plate 204 to cause the short circuit between the positive electrode plate 203 and the negative electrode plate 204.

In the above technical solution, by providing the first insulation layer 40, the first surface is divided into a plurality of regions by the first insulation layer 40. The first insulation layer 40 can reduce the heat diffusion to other regions on the substrate layer 20, allowing the heat to be transferred to the positions on the substrate layer 20 corresponding to the dendritic crystals. At the same time, the risk of heat diffusion to the current collector 100 is further reduced, thereby reducing the spread of thermal runaway in the battery cell 200 and improving the operational reliability of the battery cell 200.

In some embodiments, as illustrated in FIG. 6, the first insulation layer 40 includes a plurality of intersectant insulation strips 41 to define grid-like regions.

As illustrated in FIG. 7, the first insulation layer 40 includes a plurality of intersectant insulation strips 41, and the plurality of intersectant insulation strips 41 intersects each other. The plurality of insulation strips 41 defines grid-like regions on the first surface.

By defining the grid-like regions on the first surface by the plurality of insulation strips 41, at least one region can be surrounded by the insulation strips 41. During the charging process of the battery cell 200, the dendritic crystals are formed on some regions between the plurality of insulation stripes 41. After the positive electrode plate 203 and the negative electrode plate 204 are short-circuited, the heat is generated and transferred to the current collector 100. The regions on the current collector 100 corresponding to the dendritic crystals shrink and rupture under heat, such that the conductive layer 10 ruptures to form the through hole 21 in the regions on the current collector 100 corresponding to the dendritic crystals, thereby disconnecting the positive electrode plate 203 and the negative electrode plate 204. Moreover, when the heat is transferred to the conductive layer 10, the insulation stripes 41 can well prevent the heat from diffusing to other regions on the conductive layer 10, allowing the heat to be transferred to the positions on the conductive layer 10 corresponding to the dendritic crystals and allowing the heat to be transferred to the positions on the substrate layer 20 corresponding to the dendritic crystals. Thus, the heat transferred to other regions on the substrate layer 20 can be reduced. As a result, the spread of heat on the current collector 100 is further reduced, and the spread of thermal runaway in the battery cell 200 is further reduced, thereby improving the operational reliability of the battery cell 200.

In the above technical solution, by defining grid-like regions on the first surface with the plurality of insulation strips 41, the insulation strips 41 can well prevent the heat from diffusing to other regions on the conductive layer 10 When the heat is transferred to the conductive layer 10. In this way, the heat can be transferred to the positions on the conductive layer 10 corresponding to the dendritic crystals, and thus the heat can be transferred to the positions on the substrate layer 20 corresponding to the dendritic crystals. Thus, the heat transferred to other regions on the substrate layer 20 is reduced. As a result, the risk of heat diffusion to the current collector 100 is further reduced, and the spread of heat on the current collector 100 and the spread of thermal runaway in the battery cell 200 are further reduced, thereby improving the operational reliability of the battery cell 200.

In some embodiments, the first insulation layer 40 is formed as a coating, or the first insulation layer 40 is glued to the conductive layer 10.

By coating the first insulation layer 40 on the first surface of the conductive layer 10, a coating of the first insulation layer 40 is formed on the first surface, thereby achieving an effect of assembling the first insulation layer 40 on the conductive layer 10. Alternatively, by gluing the first insulation layer 40 to the outer surface of the conductive layer 10, the first insulation layer 40 is fixed on the outer surface of the conductive layer 10, thereby reducing a risk of separation of the conductive layer 10 from the first insulation layer 40.

In the above technical solution, by coating the first insulation layer 40 on the first surface of the conductive layer 10, the coating of the first insulation layer 40 is formed on the first surface, thereby achieving the effect of assembling the first insulation layer 40 on the conductive layer 10. In this way, the assembly of the first insulation layer 40 and the conductive layer 10 is simple and convenient. By gluing the first insulation layer 40 to the conductive layer 10, the first insulation layer 40 is fixed on the outer surface of the conductive layer 10, thereby reducing the risk of separation of the conductive layer 10 from the first insulation layer 40.

As illustrated in FIG. 3, FIG. 4, and FIG. 7, the present disclosure further provides a battery cell 200. The battery cell 200 includes a positive electrode plate 203 and a negative electrode plate 204. At least one of the positive electrode plate 203 and the negative electrode plate 204 includes the current collector 100 according to the above-mentioned embodiments.

At least one of the positive electrode plate 203 and the negative electrode plate 204 includes the current collector 100 according to the above-mentioned embodiments. When the positive electrode plate 203 and the negative electrode plate 204 are short-circuited in the charging process of the battery cell 200, the heat is generated and transferred to the current collector 100. The substrate layer 20 shrinks and ruptures under heat. With the rupture of the substrate layer 20, the conductive layer 10 ruptures to form the through hole 21. For example, after the heat is transferred to the current collector 100, the positions on the substrate layer 20 corresponding to the dendritic crystals shrink and rupture under heat, such that the rupture of the conductive layer 10 occurs at the positions corresponding to the dendritic crystals. In this way, the through hole 21 is formed on the current collector 100, and the short-circuit connection between the positive electrode plate 203 and the negative electrode plate 204 is cut off. The through hole 21 penetrates the current collector 100 in a thickness direction of the current collector 100. Thus, the risk of heat diffusion to the current collector 100 is lowered, and the spread of heat on the current collector 100 and the spread of thermal runaway in the battery cell are reduced, thereby improving the operational reliability of the battery cell.

In some embodiments, as illustrated in FIG. 4 and FIG. 7, the negative electrode plate is provided with the current collector 100.

In this embodiment, the negative electrode plate 204 is provided with the current collector 100, and the positive electrode plate 203 may be provided with or without the current collector 100 according to the above-mentioned embodiments.

During the charging process of the battery cell 200, the metal ions are deposited on the negative electrode plate 204 to form the dendritic crystals. The dendritic crystals penetrate the separator 205, and the dendritic crystals are connected between the positive electrode plate 203 and the negative electrode plate 204, which causes the short-circuit between the positive electrode plate 203 and the negative electrode plate 204. After the positive electrode plate 203 and the negative electrode plate 204 are short-circuited, the heat is generated and transferred to the negative electrode plate 204. The substrate layer 20 shrinks and ruptures under heat. With the rupture of the substrate layer 20, the conductive layer 10 ruptures to form the through hole 21. After the through hole 21 is formed, the positive electrode plate 203 and the negative electrode plate 204 are disconnected. As a result, the risk of heat diffusion to the current collector 100 is reduced, and the spread of heat on the negative electrode plate 204 and the spread of thermal runaway in the battery cell 200 are reduced, thereby improving the operational reliability of the battery cell 200.

In the above technical solution, the negative electrode plate 204 is provided with the current collector 100. After the positive electrode plate 203 and the negative electrode plate 204 are short-circuited in the charging process of the battery cell 200, the heat is transferred to the negative electrode plate 204, and the through hole 21 is formed on the negative electrode plate 204. In this way, the risk of heat diffusion to the current collector 100 is reduced, and the spread of heat on the negative electrode plate 204 and the spread of thermal runaway in the battery cell 200 are reduced, thereby improving the operational reliability of the battery cell.

In some embodiments, a separator 205 is provided between the positive electrode plate 203 and the negative electrode plate 204, and an elastic modulus of the substrate layer 20 is greater than an elastic modulus of the separator 205.

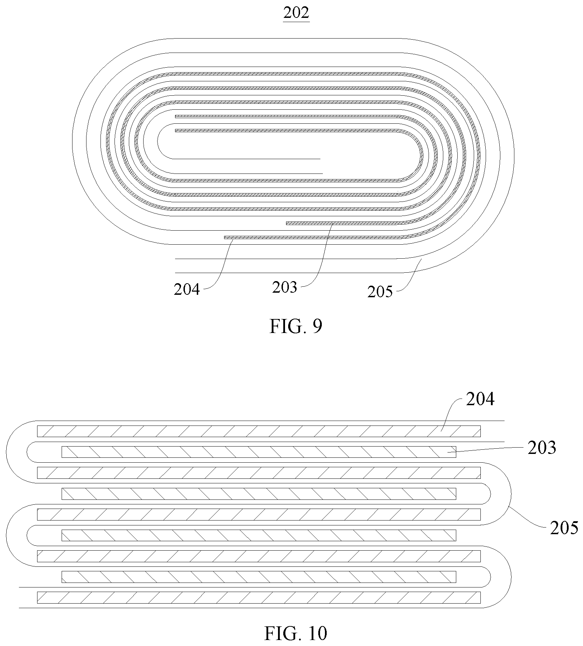

The electrode assembly 202 is formed by the positive electrode plate 203, the negative electrode plate 204, and the separator 205. As illustrated in FIG. 9, the electrode assembly 202 is formed by winding the positive electrode plate 203, the negative electrode plate 204, and the separator 205. As illustrated in FIG. 10, the electrode assembly 202 is formed by laminating the positive electrode plate 203, the negative electrode plate 204, and the separator 205.

If the elastic modulus of the substrate layer 20 is smaller than the elastic modulus of the separator 205, after the positive electrode plate 203 and the negative electrode plate 204 are short-circuited, the heat is transferred to the current collector 100, and the through hole 21 formed on the substrate layer 20 has a small cross-sectional area, which cannot ensure that the positive electrode plate 203 and the negative electrode plate 204 are disconnected. In the present disclosure, the dendritic crystals penetrate the separator 205, and the dendritic crystals are connected between the positive electrode plate 203 and the negative electrode plate 204, causing the short circuit between the positive electrode plate 203 and the negative electrode plate 204. After the positive electrode plate 203 and the negative electrode plate 204 are short-circuited, the heat is generated and transferred to the current collector 100. The substrate layer 20 shrinks and ruptures under heat. The conductive layer 10 ruptures with the rupture of the substrate layer 20 to form the through hole 21. Since the elastic modulus of the substrate layer 20 is greater than the elastic modulus of the separator 205, the through hole 21 can have a sufficiently large cross-sectional area to ensure that the positive electrode plate 203 and the negative electrode plate 204 are disconnected. As a result, the risk of short-circuit between the positive electrode plate 203 and the negative electrode plate 204, and the risk of heat diffusion to the current collector 100 are lowered. In addition, the spread of heat on the current collector 100 and the spread of thermal runaway in the battery cell 200 are reduced, thereby improving the operational reliability of the battery cell 200.

In the above technical solution, by setting the elastic modulus of the substrate layer 20 to be greater than the elastic modulus of the separator 205, the through hole 21 can have a sufficiently large cross-sectional area when the positive electrode plate 203 and the negative electrode plate 204 are short-circuited, which ensures that the positive electrode plate 203 and the negative electrode plate 204 are disconnected. As a result, the risk of the short-circuit between the positive electrode plate 203 and the negative electrode plate 204, and the risk of heat diffusion to the current collector 100 are lowered. In addition, the spread of heat on the current collector 100 and the spread of thermal runaway in the battery cell 200 are reduced, thereby improving the operational reliability of the battery cell 200.

In some embodiments, the elastic modulus of the substrate layer 20 is B, and the elastic modulus of the separator 205 is B1, B and B1 satisfying a relational expression of 0.8≤B/B1≤5.

B/B1 may be a value of 0.8, 0.9, 5, etc. The ratio of B/B1 may be appropriately selected and provided according to the actual use demand.

In the above technical solution, by providing that 0.8≤B/B1≤5, the substrate layer 20 can have suitable shrinkage, which is favorable for the substrate layer 20 to shrink and rupture after the generation of heat caused by the short-circuit in the battery cell 200. In addition, by reducing shrinkage of the separator 205, the separator 205 can be reliably arranged between the positive electrode plate 203 and the negative electrode plate 204. The positive electrode plate 203 is separated from the negative electrode plate 204 by the separator 205, thereby reducing the risk of the short-circuit between the positive electrode plate 203 and the negative electrode plate 204.

In some embodiments, the battery cell 200 is a sodium metal battery cell 200.

The sodium metal battery cell 200 can be charged and discharged quickly, which can improve use performance of the battery cell 200. Moreover, due to extremely abundant sodium reserves and low cost, by employing the sodium metal battery 200 as the battery cell 200, production cost of the battery cell 200 can be reduced. At the same time, the sodium metal battery 200 has high rate performance, and thus it can sufficiently satisfy the application under all climatic conditions

It should be noted that the embodiments and the features in the embodiments of the present disclosure may be combined with each other as long as they are not conflictive.

In the specification, the description of the reference terms such as "one embodiment", "some embodiments", "exemplary example", "example", "specific example", or "some example" indicate that the specific features, structures, materials or characteristics described with reference to the embodiment or example are included in at least an embodiment or example of the present disclosure. In this specification, exemplary descriptions of the foregoing terms do not necessarily refer to the same embodiment or example. Moreover, the specific features, structures, materials, or characteristics described may be combined in any one or more embodiments or examples in a suitable manner.

Although embodiments of the present disclosure have been illustrated and described, it is conceivable for those skilled in the art that various changes, modifications, replacements, and variations can be made to these embodiments without departing from the principles and concept of the present disclosure. The scope of the present disclosure shall be defined by the claims as appended and their equivalents.

## Claims

1. A current collector, comprising:
a conductive layer configured to output current; and
a substrate layer attached to a part of the conductive layer, wherein:
a melting point of the substrate layer is lower than a melting point of the conductive layer, and
the substrate layer is configured to shrink and rupture under heat, enabling the conductive layer to rupture to form a through hole.

2. The current collector according to claim 1, wherein the melting point of the substrate layer is A, A satisfying a relational expression of 110°C≤A≤130°C.

3. The current collector according to claim 1, wherein an elastic modulus of the substrate layer is B, B satisfying a relational expression of B≥15MPa.

4. The current collector according to any one of claims 1 to 3, further comprising a separator member disposed on the substrate layer, the separator member being configured to divide the substrate layer into a plurality of regions, and a melting point of the separator member being higher than a melting point of the substrate layer.

5. The current collector according to claim 4, wherein the separator member is configured to divide the substrate layer into grid-like regions.

6. The current collector according to claim 4 or 5, wherein the separator member is disposed on a surface of the substrate layer and located between the substrate layer and the conductive layer.

7. The current collector according to claim 6, wherein:
the separator member is formed as a coating; or
the separator member is glued to the substrate layer.

8. The current collector according to claim 4, wherein the separator member is embedded in an interior of the substrate layer.

9. The current collector according to claim 8, wherein a ratio of a thickness of the separator member to a thickness of the substrate layer is C, C satisfying a relational expression of 0.8≤C≤1.1.

10. The current collector according to any one of claims 4 to 9, wherein a melting point of the separator member is D, D satisfying a relational expression of 180°≤D.

11. The current collector according to any one of claims 4 to 9, wherein the separator member is a member made of polyimide.

12. The current collector according to any one of claims 1 to 11, wherein the conductive layer is completely wrapped around a peripheral wall of the substrate layer.

13. The current collector according to claim 1, wherein:
the conductive layer is a metal coating disposed on the substrate layer; or
the conductive layer is adhered to the substrate layer.

14. The current collector according to any one of claims 1 to 13, further comprising a first insulation layer disposed on a first surface of the conductive layer facing away from the substrate layer, the first insulation layer being configured to divide the first surface into a plurality of regions, and a melting point of the first insulation layer being higher than a melting point of the conductive layer.

15. The current collector according to claim 14, wherein the first insulation layer comprises a plurality of intersectant insulation strips to define grid-like regions.

16. The current collector according to claim 15, wherein:
the first insulation layer is formed as a coating; or
the first insulation layer is glued to the conductive layer.

17. A battery cell, comprising:
a positive electrode plate; and
a negative electrode plate, at least one of the positive electrode plate and the negative electrode plate comprising the current collector according to any one of claims 1 to 16.

18. The battery cell according to claim 17, wherein the negative electrode plate is provided with the current collector.

19. The battery cell according to claim 17 or 18, further comprising:
a separator between the positive electrode plate and the negative electrode plate, an elastic modulus of the substrate layer being greater than an elastic modulus of the separator.

20. The battery cell according to claim 19, wherein:
the elastic modulus of the substrate layer is B, and
the elastic modulus of the separator is B1, B and B1 satisfying a relational expression of 0.8≤B/B1≤5.

21. The battery cell according to any one of claims 17 to 20, wherein the battery cell is a sodium metal battery cell.

22. A battery, comprising the battery cell according to any one of claims 17 to 21.

23. An electrical device, comprising the battery according to claim 22, the battery being configured to supply electrical energy.
